(19) Europäisches Patentamt
European Patent Office
Office européen des brevets

(11) Veröffentlichungsnummer: **0 231 200**
**B1**

(12) # EUROPÄISCHE PATENTSCHRIFT

(45) Veröffentlichungstag der Patentschrift: **23.08.89**

(51) Int. Cl.⁴: **C 09 D 5/44**, C 08 G 59/50

(21) Anmeldenummer: **86903349.8**

(22) Anmeldetag: **24.05.86**

(86) Internationale Anmeldenummer: **PCT/EP 86/00316**

(87) Internationale Veröffentlichungsnummer: **WO 86/07372 (18.12.86 Gazette 86/27)**

(54) **LATENTE PRIMÄRE AMINOGRUPPEN ENTHALTENDE, WASSERVERDÜNNBARE BINDEMITTEL FÜR KATIONISCHE ELEKTROTAUCHLACKE UND VERFAHREN ZU IHRER HERSTELLUNG.**

(30) Priorität: **04.06.85 DE 3519953**

(43) Veröffentlichungstag der Anmeldung: **12.08.87 Patentblatt 87/33**

(45) Bekanntmachung des Hinweises auf die Patenterteilung: **23.08.89 Patentblatt 89/34**

(84) Benannte Vertragsstaaten: **AT BE CH DE FR GB IT LI NL SE**

(56) Entgegenhaltungen:
**EP-A-0 123 023**
**EP-A-0 134 983**
**WO-A-79/00903**
**US-A-4 017 438**
**US-A-4 427 804**

(73) Patentinhaber: **BASF Lacke + Farben Aktiengesellschaft, Max- Winkelmann- Strasse 80, D-4400 Münster (DE)**

(72) Erfinder: **GEIST, Michael, Rubensstrasse 251, D-4400 Münster (DE)**
Erfinder: **OTT, Günther, Von- Holte- Strasse 101 a, D-4400 Münster (DE)**
Erfinder: **SCHÖN, Georg, Schillerstrasse 2, D-4416 Everswinkel (DE)**

EP 0 231 200 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft latente primäre Aminogruppen enthaltende wasserverdünnbare Bindemittel für kationische Elektrotauchlacke auf der Basis von Umsetzungsprodukten von Epoxidharzen und Polyaminen, die mindestens eine blockierte primäre Aminogruppe enthalten sowie gegebenenfalls weiteren primären und/oder sekundären Aminen.

Die kationische Elektrotauchlackierung ist ein vor allem zum Grundieren häufig angewandtes Lackierverfahren, bei dem wasserverdünnbare kationische Gruppen tragende Kunstharze mit Hilfe von Gleichstrom auf elektrisch leitende Körper aufgebracht werden.

Die Verwendung modifizierter Epoxidharze als Bindemittel für kationische Elektrotauchlacke ist bekannt.

Wasserverdünnbare modifizierte Epoxidharze können zum Beispiel durch Umsetzung von Polyepoxidverbindungen mit Aminen und gegebenenfalls weiteren Modifizierungsmitteln erhalten werden (US-PS-4 104 147).

Auf diese Weise hergestellte modifizierte Epoxidharze enthalten sekundäre und tertiäre Aminogruppen. Es wird angenommen, daß vor allem die geringe Basizität der tertiären Aminogruppen dafür verantwortlich ist, daß die aus Umsetzungsprodukten von Polyepoxidverbindungen mit Aminen gewonnenen Bindemittel in Wasser nur schlecht dispergierbar sind und aus ihnen wäßrige Systeme mit niedrigen pH-Werten erhalten werden.

Um diese Schwierigkeiten zu beheben, wurde versucht, primäre Aminogruppen in die Epoxidbindemittel einzuführen. Dieses Ziel wurde durch Umsetzung von Polyepoxidverbindungen mit einem sekundären aminogruppenhaltigen oder hydroxylgruppenhaltigen (Poly) Ketimin und anschließender hydrolytischer Freisetzung der geschützten primären Aminogruppe (n) erreicht.

(US-PS-3 947 339, US-PS-4 017 438, US-PS-4 104 147, US-PS-4 148 772).

Es hat sich gezeigt, daß eine Erhöhung des Anteiles an primären Aminogruppen einen wesentlich günstigeren Einfluß auf die Wasserdispergierbarkeit und die elektrischen Abscheideeigenschaften der modifizierten Epoxidharze hat, als eine Erhöhung des Anteils an tertiären Aminogruppen.

Da niedermolekulare Amine die Oberflächeneigenschaften der elektrisch abgeschiedenen Schicht negativ beeinflussen, ist darauf zu achten, daß die Bindemittel frei von unumgesetzten Aminderivaten sind.

Bei der Einführung von primären Aminogruppen über sekundäre aminogruppenhaltige Ketimine bilden sich wenig vorteilhafte tertiäre Aminogruppen, während bei der Verwendung von hydroxylgruppenhaltigen Ketiminen eine geringere Reaktivität und Selektivität als Nachteile in Kauf genommen werden müssen.

Der Erfindung lag die Aufgabe zugrunde, wasserverdünnbare modifizierte Epoxidharze bereitzustellen, die einen möglichst hohen Anteil an primären Aminogruppen aufweisen und die frei von niedermolekularen Aminen sind.

Diese Aufgabe wurde erfindungsgemäß dadurch gelöst, daß die Bindemittel aus

A) einem Epoxidharz und
B) einem Reaktionsprodukt, das durch Umsetzung eines Ketons bzw. Aldehyds mit einem Polyamin, welches neben einer sterisch gehinderten primären Aminogruppe noch mindestens eine weitere primäre Aminogruppe enthält, erhalten worden ist, sowie gegebenen falls weiteren
C) primären oder sekundären Aminen

und anschließender hydrolytischer Freisetzung der primären Aminogruppen hergestellt worden sind.

Die mit der Erfindung erzielten Vorteile bestehen insbesondere darin, daß neben einer Erweiterung der Rohstoffbasis die Anknüpfung der die latenten primären Aminogruppen enthaltenden Komponente an das Epoxidharz über eine sterisch gehinderte primäre Aminogruppe erfolgt, wodurch

- an Stelle der wenig vorteilhaften tertiären Aminogruppen stärker basische, ein aktives H-Atom enthaltende sekundäre Aminogruppen gebildet und
- infolge der hohen Reaktivität und Selektivität der primären Aminogruppe schnelle und quantitativ ablaufende Umsätze erreicht werden.

Als Komponente A können alle Verbindungen eingesetzt werden, die mindestens eine, bevorzugt zwei reaktive Epoxidgruppe(n) enthalten.

Das Molekulargewicht der Komponente A liegt bevorzugt im Bereich von 350 bis 2000.

Bevorzugte Epoxidharze sind aus Polyphenolen und Epihalohydrinen hergestellte Polyglycidylether von Polyphenolen. Als Polyphenole können z. B. folgende Verbindungen verwendet werden:

Bis-(4-hydroxyphenyl)-2,2-propan, 4,4'-Dihydroxybenzophenon, Bis-(4-hydroxyphenyl)-1,1-ethan, Bis-(4-hydroxyphenyl)-1,1-isobutan, Bis-(4-hydroxy-tertiär-butylphenyl)-2,2-propan, Bis-(2-hydroxynaphtyl)-methan, 1,5-Dihydroxynaphthalin und phenolische Novolakharze.

Ebenfalls geeignet sind Polyglycidylether von mehrwertigen Alkoholen, wie Ethylenglykol, Diethylenglykol, Triethylenglykol, 1,2-Propylenglykol, 1,3-Propylenglykol, 1,5-Pentandiol, 1,2,6-Hexantriol, Glycerin und Bis-(4-hydroxycyclohexyl)-2,2-propan.

Es können auch Polyglycidylester von Polycarbonsäuren, wie z. B. Oxalsäure, Bernsteinsäure, Glutarsäure, Terephthalsäure, 2,6-Naphtalindicarbonsäure, dimerisierter Linolensäure usw., eingesetzt werden. Typische

Beispiele sind Glycidyladipat und Glycidylphthalat.

Ferner sind Hydantoinepoxide und Polyepoxidverbindungen geeignet, die man durch Epoxidierung einer olefinisch ungesättigten alicyclischen Verbindung erhält.

Es können auch Epoxidharze verwendet werden, die durch Umsetzung mit

A) nieder- und/oder hochmolekularen carboxylgruppenhaltigen Verbindungen, wie z. B. gesättigte oder ungesättigte Monocarbonsäuren (z. B. Benzoesäure, Leinölfettsäure, 2-Äthylhexansäure, Versaticsäure), aliphatische, cycloalphatische und/oder aromatische Dicarbonsäuren verschiedener Kettenlänge (z. B. Adipinsäure, Sebacinsäure, Isophthalsäure oder dimere Fettsäuren), Hydroxyalkylcarbonsäuren (z. B. Milchsäure, Dimethylolpropionsäure) sowie carboxylgruppenhaltiger Polyester und/oder
B) nieder- und/oder hochmolekularen aminogruppenhaltigen Verbindungen, wie Diethylamin oder Ethylhexylamin oder Diaminen mit sekundären Aminogruppen, z. B. N,N'-Dialkylalkylendiamin wie Dimethylethylendiamin, N,N'-Dialkylpolyoxyalkylenamin wie N,N'-Dimethylpolyoxypropylendiamin, cyanalkylierte Alkylendiamine wie Bis-N,N'-Cyanethylethylendiamin, cyanalkylierte Polyoxyalkylenamine wie Bis-N,N'-Cyanethylpolyoxypropylendiamin, Polyaminoamide wie Versamide oder das Umsetzungsprodukt von einem Mol Diaminohexan mit zwei Molen Monoglycidylether oder Monoglycidylester, speziell Glycidylester α-verzweigter Fettsäuren wie der Versaticsäure, und/oder
C) nieder- und/oder hochmolekularen hydroxylgruppenhaltigen Verbindungen, wie Neopentylglykol, Bisethoxyliertes Neopentylglykol, Hydroxypivalinsäureneopentylglykolester, Dimethylhydantoin-N,N'-diethanol, Hexandiol-1,6, Hexandiol-2,5, 1,4-Bis-(hydroxymethyl)-cyclohexan, 1,1-Isopropyliden-bis-(p-phenoxy)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroxymethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte und/oder
D) gesättigten oder ungesättigten Fettsäuremethylestern, die in Gegenwart von Natriummethylat mit Hydroxylgruppen der Epoxidharze umgeestert werden und/oder
E) thiolgruppenhaltigen Verbindungen und/oder
F) Sulfid/Säuremischungen und/oder
G) Phosphin/Säuremischungen

modifiziert worden sind und noch über freie Epoxidgruppen verfügen.

Besonders bevorzugt werden die in CA 1 179 443 offenbarten modifizierten Epoxidharze als Komponente A verwendet.

Bei Herstellung der Komponente B werden die sterisch ungehinderten primären Aminogruppen des Polyamins durch Umsetzung mit einem Keton oder einem Aldehyd blockiert. Die Verwendung der gegenüber den Aldehyden reaktionsträgeren Ketonen hat den Vorteil, daß die Anwesenheit der nach der hydrolytischen Freisetzung der primären Aminogruppen abgespaltenen Ketone im Elektrotauchbad keine technischen Probleme nach sich zieht. Der Einsatz von Aldehyden hat neben dem Vorteil der höheren Reaktivität den Nachteil, daß damit gerechnet werden muß, daß die abgespaltenen Aldehyde bei langer Verweilzeit im Tauchbad zu den entsprechenden Carbonsäuren oxidiert werden und infolgedessen technische Schwierigkeiten auftreten können.

Für die Herstellung der Komponente B sind Ketone der allgemeinen Strukturformeln I geeignet.

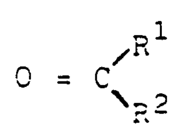

(I)

$R^1$ und $R^2$ sind organische Gruppen, die sich während der Ketiminbildung chemisch inert verhalten. $R^1$ und $R^2$ sind bevorzugt Alkylreste mit 1 bis 4 C-Atomen. Es ist häufig vorteilhaft, ein Keton zu verwenden, das mit Wasser leicht überdestilliert.

Bevorzugte Beispiele von Ketonen schließen ein Aceton, Methylethylketon, Diethylketon, Methylpropylketon, Methylisopropylketon, Methyl-n-butylketon, Methylisobutylketon, Ethylisopropylketon, Cyclohexanon, Cyclopentanon, Acetophenon. Besonders bevorzugte Ketone sind Aceton, Methylethylketon und Methylisobutylketon.

Als Aldehyde eignen sich Verbindungen der allgemeinen Strukturformel II.

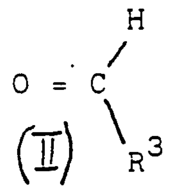

(II)

$R^3$ ist eine organische Gruppe, bevorzugt eine Alkyl oder Arylgruppe. Es ist vorteilhaft, einen Aldehyd zu verwenden, der mit Wasser leicht überdestilliert. Typische Beispiele für einsetzbare Aldehyde sind Acetaldehyd, Propionaldehyd, Butyraldehyd, Isobutyraldehyd und Benzaldehyd. Besonders bevorzugt ist Acetaldehyd.

Die zur Herstellung der Komponente B einsetzbaren Polyamine müssen neben einer sterisch gehinderten primären Aminogruppe noch mindestens eine weitere primäre Aminogruppe enthalten. Unter sterisch gehinderten primären Aminogruppen werden primäre Aminogruppen verstanden, die auf Grund sterischer Effekte gegen einen Angriff sterisch anspruchsvoller Reaktionspartner abgeschirmt sind.

Bevorzugte Polyamine sind gegebenenfalls substituierte alicyclische oder aliphatische Polyamine, die neben einer sterisch gehinderten primären Aminogruppe noch mindestens eine weitere primäre Aminogruppe enthalten. Besonders bevorzugt sind gegebenenfalls substituierte alicyclische oder aliphatische Polyamine, die neben einer durch eine oder zwei α-ständige(n) Alkylgruppe(n) sterisch gehinderten primären Aminogruppe noch mindestens eine weitere primäre Aminogruppe enthalten.

Ganz besonders bevorzugt sind Polyamine, die sich von folgender Formel III ableiten

$$H_2N-\overset{\displaystyle R^4}{\overset{|}{\underset{\underset{\displaystyle R^5}{|}}{C}}}-R^6-(NH_2)_n \qquad (III)$$

wobei

$R^4$ = 1 - 5 C-Alkyl, bevorzugt Methyl, Ethyl, Propyl
$R^5$ = H oder $R^4$
$R^6$ = 1 - 20 C-Alkylen, gegebenenfalls substituiert, bevorzugt $-(CH_2)_m-$ mit m = 1 - 10
$n \geqslant 1$

Als typische Beispiele für Polyamine, die zur Herstellung der Komponente B geeignet sind, seien Trimethylhexamethylendiamin-1,6, Isophorondiamin, 1,2-Propandiamin und 1,2-Diamino-2-methylpropan genannt.

In einem bevorzugten Verfahren zur Herstellung der Komponente B werden die Carbonylkomponente und das Polyamin in einem geeigneten Lösungsmittel (z. B. Xylol, Toluol, n-Hexan) erhitzt und das Reaktionswasser durch azeotrope Destillation entfernt. Wenn pro Mol zu verkappender primärer Aminogruppen etwa 1 Mol Keton bzw. Aldehyd eingesetzt wird, werden in der Regel alle sterisch ungehinderten primären Aminogruppen blockiert.

Die als Komponente C verwendeten primären oder sekundären Amine sollten möglichst in Wasser lösliche Verbindungen sein. Es können zum Beispiel Mono und Dialkylamine, wie Methylamin, Ethylamin, Propylamin, Butylamin, Dimethylamin, Diethylamin, Dipropylamin, Methylbutylamin usw., verwendet werden. Ebenfalls geeignet sind Alkanolamine, wie z. B. Methylethanolamin und Diethanolamin. Ferner können Dialkylaminoalkylamine, wie z. B. Dimethylaminoethylamin und Diethylaminopropylamin eingesetzt werden.

In den meisten Fällen werden niedermolekulare Amine verwendet, doch ist es auch möglich, höhermolekulare Monoamine anzuwenden, insbesondere dann, wenn die Absicht besteht, die Flexibilität des Harzes durch den Einbau solcher Amine zu erhöhen. In ähnlicher Weise kann man auch Mischungen aus niedermolekularen und höhermolekularen Aminen zur Modifizierung der Harzeigenschaften verwenden.

Die Erfindung umfaßt auch ein Verfahren zur Herstellung der Bindemittel, das dadurch gekennzeichnet ist, daß

A) ein Epoxidharz mit
B) einem Reaktionsprodukt, das durch Umsetzung eines Ketons bzw. Aldehyds mit einem Polyamin, welches neben einer sterisch gehinderten primären Aminogruppe noch mindestens eine weitere primäre Aminogruppe enthält, erhalten worden ist und gegebenenfalls noch mit einem weiteren
C) primären oder sekundären Amin

umgesetzt wird und die primären Aminogruppen durch Hydrolyse freigesetzt werden.

Die Reaktion des Epoxidharzes mit der Komponente B ist häufig exotherm. Um die Umsetzung zu vervollständigen, kann es in manchen Fällen nützlich sein, die Reaktionsmischung auf 40 bis 130°C zu

erwärmen. Die Reaktionsbedingungen sind so zu wählen, daß die blockierten primären Aminogruppen erst dann freigesetzt werden, wenn keine Möglichkeiten zur Bildung höhermolekularer Produkte mehr gegeben sind. Die primäre Aminogruppe wird bei der Verdünnung mit Wasser hydrolytisch freigesetzt.

Die Umsetzung des Epoxidharzes mit der Komponente C verläuft oft exotherm und kann sowohl vor als auch nach der Reaktion mit der Komponente B durchgeführt werden. Je nach gewünschtem Reaktionsverlauf ist es empfehlenswert, die-Reaktionstemperatur auf bis zu 130°C zu erhöhen.

Durch jeweilige Bestimmung des Epoxidäquivalentgewichtes kann der Verlauf der Umsetzungen des Epoxidharzes mit den Komponenten B bzw. C verfolgt werden.

Die Wasserverdünnbarkeit der Bindemittel wird durch Neutralisation der Aminogruppen mit wasserlöslichen Säuren (z. B. Ameisensäure, Essigsäure oder Phosphorsäure) erreicht.

Die erfindungsgemäß hergestellten Bindemittel können nach an sich bekannten Methoden durch Zusatz von Vernetzungsmitteln vernetzt bzw. durch chemische Modifikation in selbstvernetzende Systeme überführt werden. Ein selbstvernetzendes System kann z. B. dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Häufig angewandte Methoden zur Vernetzung von Bindemitteln sind z. B. in folgenden Dokumenten publiziert: GB-1 303 480-A, EP-12 463 und US-PS-4 252 703, US-PS-4 364 860 und GB 1 557 516-A.

Beispiele für geeignete Aminoplastvernetzungsmittel sind der Hexamethylether von Hexamethylolmelamin, der Triethyltrimethylether von Hexamethylolmelamin, der Hexabutylether von Hexamethylolmelamin und der Hexamethylether von Hexamethylolmelamin und polymere butylierte Melaminformaldehydharze. Ebenso verwendbar sind alkylierte Harnstofformaldehydharze.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300°C, aber reagiert. Bei der Herstellung der blockierten Polyisocyanate können beliebige für die Vernetzung geeignete organische Polyisocyante verwendet werden. Bevorzugt sind die Isocyanate, die etwa 3 bis etwa 36, insbesondere etwa 8 bis etwa 15 Kohlenstoffatome enthalten. Beispiele geeigneter Diisocyanate sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Diphenylendiisocyanat, 1,5-Naphthylendiisocyanat, 1,4-Naphthylendiisocyanat, 1-Isocyanatomethyl-5-isocyanato-1,3,3-trimethylcyclohexan, bis-(4-Isocyanatocyclohexyl)methan, bis-(4-Isocyanatophenyl)-methan, 4,4'-Diisocyanatodiphenylether und 2,3-bis-(8-Isocyanatooctyl)-4-octyl-5-hexylcyclohexen.

Es können auch Polyisocyanate von höherer Isocyanatfunktionalität verwendet werden.

Beispiele dafür sind tris-(4-Isocyanatophenyl)-methan, 1,3,5-Triisocyanatobenzol, 2,4,6-Triisocyanatotoluol, 1,3,5-tris-(6-Isocyanatohexylbiuret, bis-(2,5-Diisocyanato-4-methylphenyl)-methan und polymere Polyisocyanate, wie Dimere und Trimere von Diisocyanatotoluol. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Clorethyl-, Propyl-, Butyl-, Amyl-, Hexyl-, Heptyl-, Octyl-, Nonyl, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol.

Andere geeignete Blockierungsmittel sind Hydroxylamine, wie Ethanolamin und Oxime, wie Methylethylketonoxim, Acetonoxim und Cyclohexanonoxim.

Die genannten Polyisocyanate und Blockierungsmittel können bei geeigneten Mengenverhältnissen auch zur Herstellung der oben beschriebenen teilblockierten Polyisocyanate verwendet werden.

Der unter Verwendung der erfindungsgemäßen Bindemittel hergestellten wäßrigen Überzugszusammensetzungen können allgemein übliche Zusätze, wie z. B. koaleszierende Lösungsmittel, Pigmente, oberflächenaktive Mittel, Vernetzungskatalysatoren, Antioxidantien, Füllstoffe und Antischaummittel zugegeben werden.

Die mit Hilfe der erfindungsgemäßen Bindemittel zubereiteten wäßrigen Systeme sind insbesondere für das kationische Elektrotauchlackierverfahren geeignet; sie können aber auch in konventionellen Beschichtungsverfahren eingesetzt werden. Als Beschichtungssubstrate können z. B. gegebenenfalls vorbehandelte Metalle, wie Eisen, Stahl, Kupfer, Zink, Messing, Magnesium, Zinn, Nickel, Chrom und Aluminium aber auch imprägniertes Papier und andere elektrisch leitende Substrate benutzt werden.

Die Erfindung wird in den folgenden Beispielen näher erläutert. Alle Angaben über Teile und Prozentsätze sind Gewichtsangaben, falls nicht ausdrücklich etwas anderes festgestellt wird.

I. **Herstellung eines Diamin-Monoketimins**

In einem Reaktionsgefäß mit Rührer, Innenthermometer, Inertgaszuleitung und Wasserabscheider mit

vorgeschalteter Raschig-Kolonne werden 853,3 g 1,2-Propylendiamin (11,5 mol) zusammen mit 1153,9 g Methylisobutylketon (11,5 mol) und 200 g n-Hexan eingewogen und auf 90°C erwärmt, wo das erste wasserhaltige Dessillat auftritt. Mit zunehmender Reaktionsdauer wird die Temperatur schrittweise bis auf 105°C angehoben und dort gehalten bis sich kein weiteres Reaktionswasser mehr abscheidet und die theoretische Wassermenge von 200 g annähernd erreicht ist. Das Produkt wird anschließend unter Stickstoff gelagert. Die Lösung besitzt ein Aminäquivalentgewicht von 87,5 und einen theoretischen Festkörper von 89,3 %.

Die Analyse des Destillats ergibt einen 1,2-Propylendiaminverlust von 2,8 % (titrimetrisch bestimmt) und einen Methylisobutylketonverlust von 0,05 % (gaschromatographisch bestimmt).

II. **Darstellung des Bindemittels I**

In einem geeigneten Reaktor werden 2004 Teile eines Epoxidharzes auf Basis Bisphenol A mit einem Epoxidäquivalentgewicht von 501 mit 312 Teilen Xylol vorgelegt und auf 115°C erhitzt. Die enthaltenen Wasserspuren werden durch Auskreisen unter schwachem Vakuum entfernt. Sodann fügt man 105 Teile Hexylglykol zu und kühlt auf 70°C ab. Innerhalb von 30 Minuten tropft man 157 Teile Diethanolamin zu und fährt 2 Stunden bei dieser Temperatur. Anschließend gibt man 630 Teile eines Umsetzungsproduktes aus 1 Mol Hexamethylendiamin und 2 Mol Cardura E 10 (Handelsprodukt der Shell) zu und steigert die Temperatur auf 120°C. Nach einer Stunde kühlt man und gibt währenddessen 195 Teile sekundäres Butanol zu. Nachdem die Temperatur 70°C erreicht hat, fügt man 84 Teile des zuvor beschriebenen Monoketimins (T) zu und steigert die Temperatur im Verlauf von 1 Stunde auf 80°C. Nach weiteren 2 Stunden kühlt man und trägt das Produkt aus. Man erhält eine klare Harzlösung mit folgenden Kennzahlen:

| | |
|---|---|
| Festkörper (1 Stunde bei 130°C): | 82,5 % |
| MEQ-Base: | 1,5 meq/g |
| Viskosität (40 %-ig in Propylenglykolmonomethylether): | 3,0 dPas |

III. **Darstellung eines Bindemittels II**

In einem geeigneten Reaktor werden 1827 Teile eines handelsüblichen Bisphenol A-Epoxidharzes (Epoxidäquivalentgewicht 188), 212 Teile Dodecylphenol und 63 Teile Xylol vorgelegt und auf 130°C erhitzt. Man fügt 12 Teile Dimethylbenzylamin zu und hält nach kurzer Exothermie die Temperatur auf 132°C. Nach Erreichen eines Epoxidäquivalentgewichts von 400 werden weitere 298 Teile Dodecylphenol zugegeben, und die Reaktion wird fortgeführt bis zu einem Epoxidäquivalentgewicht von 720. Sodann wird mit 229 Teilen Xylol und 162 Teilen Hexylglykol verdünnt und gleichzeitig gekühlt. Bei 85°C fügt man 255 Teile Diethanolamin zu und hält die Temperatur bis der Gesamtgehalt an Epoxid und Amin 1,28 meq/g erreicht hat. Sodann werden 79 Teile des Monoketimins aus Beispiel I zugegeben. Im Verlauf von 2 Stunden wird die Temperatur auf 115°C gesteigert und dort eine weitere Stunde gehalten, bevor nach kurzer Kühlung ausgetragen wird. Das Produkt besitzt folgende Kennzahlen:

| | |
|---|---|
| Festkörper (1 Stunde bei 130°C): | 85,5 % |
| MEQ-Base: | 1,45 meq/g |
| Viskosität (40 %-ig in Propylenglykolmonomethylether): | 1,0 dPas |

IV. **Herstellung von Vernetzungsmitteln**

Um hochbeständige Überzüge zu erhalten, ist es vorteilhaft, die Bindemittel durch Zumischen eines Vernetzungsmittels über eine chemische Reaktion zu härten. Im folgenden sind Beispiele von Vernetzungsmitteln aufgeführt, mit denen die erfindungsgemäßen Bindemittel bei Raumtemperatur stabile Mischungen bilden und beim Erhitzen vernetzen.

**Vernetzer I:**

Gemäß der DE-OS-2 701 002, Beispiel I, wird ein geblockter Isocyanatvernetzer (Polyurethanvernetzer) hergestellt, indem 218 Teile 2-Ethylhexanol langsam zu 291 Teilen einer 80/20-Isomerenmischung von 2,4-/2,6-Toluylendiisocyanat unter Rühren und in einer Stickstoffatmosphäre gegeben werden, wobei die Reaktionstemperatur durch äußere Kühlung unter 38°C gehalten wird. Der Ansatz wird noch eine weitere halbe Stunde bei 38°C gehalten und dann auf 60°C erwärmt, wonach 75 Teile Trimethylolpropan und anschließend 0,08 Teile Dibutylzinndilaurat als Katalysator zugegeben werden. Nach einer exothermen Reaktion zu Beginn wird der Ansatz 1,5 Stunden bei 121°C gehalten, bis im wesentlichen die gesamten Isocyanatgruppen verbraucht sind, was an den infrarotspektrum zu erkennen ist. Der Ansatz wird dann mit 249 Teilen Ethylenglykolmonoethylether verdünnt.

**Vernetzer II**

Gemäß der EP-0 040 867 Beispiel 2 d) wird ein Polyestervernetzer hergestellt: 192 Teile Trimellithsäureanhydrid und 500 Teile Versaticsäureglycidylester mit einem Epoxidäquivalentgewicht von 250 werden vermischt und unter Rühren auf 100°C erwärmt. Es tritt eine exotherme Reaktion auf, und die Temperatur steigt auf 190°C. Nach Abkühlen auf 140°C werden 2 Teile Benzyldimethylamin zugegeben. Die Mischung wird 3 Stunden bei 140°C gehalten. Es entsteht ein viskoses, klares Produkt das zusätzlich mit 295 Teile Ethylenglykolmonobutylether verdünnt wird.

V. **Herstellung von wäßrigen Dispersionen I - II**

Zur Herstellung der wäßrigen Dispersionen wird das Bindemittel zusammen mit Butylglykol, Entschäumer, Eisessig und entionisiertem Wasser (Pos. 1) vergelegt und 30 Minuten unter Rühren homogenisiert. Sodann werden Vernetzer und Katalysator zugegeben. Nach weiterem 30-minütigem Homogenisieren wird langsam mit entionisiertem Wasser (Pos. 2) bis zum angegebenen Endfestkörper verdünnt. Anschließend werden die Dispersionen einer kurzen Vakuumdestillation unterworfen, wobei die flüchtigen Lösungsmittel als organische Phase aus dem Destillat abgetrennt werden.

| Dispersionen | I | II | III |
|---|---|---|---|
| Bindemittel I | 910 | - | - |
| Bindemittel II | - | 917 | 917 |
| Vernetzer I | - | - | 480 |
| Vernetzer II | 528 | 480 | - |
| Dibutylzinndilaurat | - | - | 11,2 |
| Blei(II)-octoat-Lösung (24 % Pb) | 33 | 33 | - |
| Butylglykol | - | - | 70 |
| Entschäumerlösung | 1,1 | 1,1 | 1,1 |
| Eisessig | 30,4 | 29,- | 29,- |
| entionisiertes Wasser 1 | 737 | 738 | 761 |
| entionisiertes Wasser 2 | 1493 | 2240 | 1154 |
| Festkörper (60' 130°C) | 30,7 % | 27,8 % | 33,4 % |

VI. **Zubereitung der Elektrotauchbäder und Abscheidung von Lackfilmen**

Zur Prüfung als kathodische Elektrolacke werden die vorstehend beschriebenen wäßrigen Bindemitteldispersionen mit entionisiertem Wasser auf einen Festkörper von 25 % eingestellt. Zu 1000 Teilen der jeweiligen Bindemitteldispersion werden unter Rühren 165 Teile der nachfolgend beschriebenen Pigmentpaste eingetragen. Anschließend wird der Badfestkörper mit entionisiertem Wasser auf 20 % (30 Minuten, 150°C) reduziert.

**Pigmentpaste**

Nach Beispiel 1 a) der DE-OS-3 121 765 wird ein Pastenbindemittel hergestellt. Dazu werden in einem Reaktionsgefäß 200 Teile Ethylenglykolmonobutylether auf 90°C erwärmt. Dann wird binnen 2 Stunden eine Mischung aus 396 Teilen N-Vinylpyrrolidon, 204 Teilen Vinylpropionat und 1,2 Teilen Azobisisobutyronitril zugetropft. Abschließend wird 1 Stunde lang bei 90°C nachpolymerisiert. Das resultierende Lösungspolymerisat hat einen K-Wert nach Fikentscher von 24. Der Festkörpergehalt der Copolymerisatlösung beträgt 76 %.

In einer Rührwerksmühle werden 250 Teile der obigen Copolymerisatlösung, 210 Teile Ethylenglykolmonobutylether, 555 Teile Ethylenglykolmonoethylether, 837 Teile Wasser, 1084 Teilen Kaolin, 217 Teile basisches Bleisilikat, 145 Teile Ruß, 36 Teile Rutil und 3000 Teile Glasperlen von einem Durchmesser von 2 mm 45 Minuten bei einer Drehzahl von 1000 Umdrehungen/Minute gerührt. Nach dem Abtrennen der Glasperlen wird eine Schwarzpaste mit einem Festgehalt von 50,6 % erhalten.

Man läßt die Elektrotauchbäder 3 Tage bei 30°C unter Rühren altern. Die Abscheidung der Lackfilme erfolgt während 2 Minuten auf kathodisch geschalteten zinkphosphatierten Stahlprüftafeln bei der angegebenen Spannung. Die Badtemperatur beträgt hierbei 27°C. Die abgeschiedenen Naßfilme werden mit entionisiertem Wasser nachgespült und während 20 Minuten bei 180°C bzw. 160°C eingebrannt (Tabelle auf Seite 17).

| Lack gemäß | | Dispersion I | Dispersion II | Dispersion III |
|---|---|---|---|---|
| Abscheidespannung | V | 350 | 300 | 300 |
| Filmdicke | µm | 23 | 29 | 26 |
| Umgriff nach FORD | cm (V) | 19,8 | 21,3 | 20,7 |
| Verlauf+) | | 2 | 2 | 1 |
| Gitterschnitt+) | | 0 | 0 | 0 |
| Erichsen-Tiefung | mm | 7,4 | 9,8 | 8,2 |
| Schlagtiefung | (in x 1b) | 120 | 160 | 100 |
| Vernetzung++) | | 0 | 0 | 0 |
| Einbrenntemperatur | °C | 170 | 170 | 180 |

+) 0 bester Wert, 5 schlechtester Wert
++) 20 Doppelhübe mit einem mit MIBK getränkten Wattebausch
0 = kein Angriff der Oberfläche

**Patentansprüche**

1. Latente primäre Aminogruppen enthaltende, wasserverdünnbare Bindemittel für kationische Elektrotauchlacke auf der Basis von Umsetzungsprodukten von Epoxidharzen und Polyaminen, die mindestens eine durch Ketiminisierung blockierte primäre Aminogruppe enthalten sowie gegebenenfalls weiteren primären und/oder sekundären Aminen, dadurch gekennzeichnet, daß die Bindemittel aus

A) einem Epoxidharz und
B) einem Reaktionsprodukt, das durch Umsetzung eines Ketons mit einem Polyamin, welches neben einer sterisch gehinderten primären Aminogruppe noch mindestens eine weitere primäre Aminogruppe enthält, erhalten worden ist sowie gegebenenfalls weiteren
G) primären und/oder sekundären Aminen

hergestellt worden sind.

2. Latente primäre Aminogruppen enthaltende, wasserverdünnbare Bindemittel für kationische Elektrotauchlacke auf der Basis von Umsetzungsprodukten von Epoxidharzen und Polyamiden, die mindestens eine blockierte primäre Aminogruppe enthalten sowie gegebenenfalls weiteren primären und/oder sekundären Aminen, dadurch gekennzeichnet, daß die Bindemittel aus

A) einem Epoxidharz und
B) einem Reaktionsprodukt, daß durch Umsetzung eines Aldehyds mit einem Polyamin, welches neben einer sterisch gehinderten primären Aminogruppe noch mindestens eine weitere primäre Aminogruppe enthält, erhalten worden ist sowie gegebenenfalls weiteren
G) primären und/oder sekundären Aminen

hergestellt worden sind.

3. Bindemittel nach den Ansprüchen 1 oder 2, dadurch gekennzeichnet, daß die bei der Herstellung der Komponente B) eingesetzte Menge an Keton bzw. Aldehyd so gewählt worden ist, daß alle sterisch ungehinderten primären Aminogruppen des Polyamins blockiert worden sind.

4. Bindemittel nach den Ansprüchen 1 bis 3, dadurch gekennzeichnet, daß als Polyamin ein gegebenenfalls substituiertes alicyclisches oder aliphatisches Polyamin verwendet worden ist, das neben einer sterisch gehinderten primären Aminogruppe noch mindestens eine weitere primäre Aminogruppe enthielt.

5. Bindemittel nach den Ansprüchen 1 bis 3, dadurch gekennzeichnet, daß als Polyamin ein gegebenenfalls substituiertes alicyclisches oder aliphatisches -alkylsubstituiertes Polyamin eingesetzt worden ist.

6. Bindemittel nach den Ansprüchen 1 bis 3, dadurch gekennzeichnet, daß als sterisch gehindertes Polyamin ein Polyamin der allgemeinen Formel III verwendet worden ist

$$H_2N-\underset{R^5}{\overset{R^4}{C}}-R^6-(-NH_2)_n \qquad (III)$$

wobei
$R^4$ = 1 - 5 C-Alkyl, bevorzugt Methyl, Ethyl, Propyl
$R^5$ = H oder $R^4$
$R^6$ = 1 - 20 C-Alkylen, gegebenenfalls substituiert, bevorzugt $-(CH_2)_m-$ mit $m = 1 - 10$
$n \geq 1$
bedeutet.

7. Bindemittel nach den Ansprüchen 1 bis 3, dadurch gekennzeichnet, daß als Polyamin 1,2-Propandiamin eingesetzt worden ist.

8. Bindemittel nach den Ansprüchen 1 bis 3, dadurch gekennzeichnet, daß als Polyamin 1,2-Diamino-2-methyl-propan eingesetzt worden ist.

9. Bindemittel nach den Ansprüchen 1 bis 8, dadurch gekennzeichnet, daß bei der Herstellung der Komponente B ein Gemisch verschiedener Ketone und/oder Aldehyde verwendet worden ist.

10. Bindemittel nach den Ansprüchen 1 - 9, dadurch gekennzeichnet, daß bei der Herstellung der Komponente B ein Gemisch verschiedener Polyamine verwendet worden ist.

11. Verfahren zur Herstellung von latente primäre Aminogruppen enthaltenden, wasserverdünnbaren Bindemitteln für kationische Elektrotauchlacke auf der Basis von Umsetzungsprodukten von Epoxidharzen und Polyaminen, die mindestens eine durch Ketiminisierung blockierte primäre Aminogruppe enthalten sowie gegebenenfalls weiteren primären oder sekundären Aminen, dadurch gekennzeichnet, daß die Bindemittel durch Umsetzung von

A) einem Epoxidharz mit
B) einem Reaktionsprodukt, das durch Umsetzung eines Ketons mit einem Polyamin, welches neben einer sterisch gehinderten primären Aminogruppe noch mindestens eine weitere primäre Aminogruppe enthält, erhalten worden ist sowie gegebenenfalls mit weiteren
C) primären und/oder sekundären Aminen

hergestellt werden.

2. Verfahren zur Herstellung von latente primäre Aminogruppen enthaltenden, wasserverdünnbaren Bindemitteln für kationische Elektrotauchlacke auf der Basis von Umsetzungsprodukten von Epoxidharzen und Polyaminen, die mindestens eine blockierte primäre Aminogruppe enthalten sowie gegebenenfalls weiteren primären oder sekundären Aminen, dadurch gekennzeichnet, daß die Bindemittel durch Umsetzung von

A) einem Epoxidharz mit
B) einem Reaktionsprodukt, das durch Umsetzung eines Aldehyds mit einem Polyamin, welches neben einer sterisch gehinderten primären Aminogruppe noch mindestens eine weitere primäre Aminogruppe enthält, erhalten worden ist sowie gegebenenfalls mit weiteren
C) primären und/oder sekundären Aminen

hergestellt werden.

13. Verfahren nach den Ansprüchen 11 oder 12, dadurch gekennzeichnet, daß die bei der Herstellung der Komponente B eingesetzte Menge an Keton bzw. Aldehyd so gewählt worden ist, daß alle sterisch ungehinderten primären Aminogruppen des Polyamins blockierte worden sind.

14. Verfahren nach den Ansprüchen 11 bis 13, dadurch gekennzeichnet, daß als Polyamin ein gegebenenfalls substituiertes alicyclisches oder aliphatisches Polyamin verwendet worden ist, das neben einer sterisch gehinderten primären Aminogruppe noch mindestens eine weitere primäre Aminogruppe enthielt.

15. Verfahren nach den Ansprüchen 11 - 13, dadurch gekennzeichnet, daß als Polyamin ein gegebenenfalls substituiertes alicyclisches oder aliphatisches -alkylsubstituiertes Polyamin eingesetzt worden ist.

16. Verfahren nach den Ansprüchen 11 bis 13, dadurch gekennzeichnet, daß als sterisch gehindertes Polyamin ein Polyamin der allgemeinen Formel III verwendet worden ist.

$$\begin{array}{c} R^4 \\ | \\ H_2N\text{-}C\text{-}R^6\text{-}(\text{-}NH_2)_n \\ | \\ R^5 \end{array} \qquad (III)$$

wobei

$R^4 = 1$ - 5 C-Alkyl, bevorzugt Methyl, Ethyl, Propyl
$R^5 =$ H oder $R^4$ .
$R^6 = 1$ - 20 C-Alkylen, gegebenenfalls substituiert, bevorzugt $-(CH_2)_m-$ mit $m = 1 - 10$
$n \geqslant 1$
bedeuten.

17. Verfahren nach den Ansprüchen 11 bis 13, dadurch gekennzeichnet, daß als Polyamin 1,2-Propandiamin eingesetzt worden ist.

18. Verfahren nach den Ansprüchen 11 bis 13, dadurch gekennzeichnet, daß als Polyamin 1,2-Diamino-2-methyl-propan eingesetzt worden ist.

19. Verfahren nach den Ansprüchen 11 bis 18, dadurch gekennzeichnet, daß bei der Herstellung der Komponente B ein Gemisch verschiedener Ketone und/oder Aldehyde verwendet worden ist.

20. Verfahren nach den Ansprüchen 11 bis 19, dadurch gekennzeichnet, daß bei der Herstellung der Komponente B ein Gemisch verschiedener Polyamine verwendet worden ist.

21. Verwendung der Bindemittel nach den Ansprüchen 1 bis 10 für Elektrotauchbäder.

**Claims**

1. Water-dilutable binders for cationic electrocoating finishes which contains latent primary amino groups and is based on reaction products of epoxy resins and polyamines, which contain at least one primary amino group blocked by ketiminization, and, if appropriate, further primary and/or secondary amines, characterized in that the binder is prepared from

A) an epoxy resin and
B) a reaction product obtained by reacting a ketone with a polyamine, which in addition to a sterically hindered primary amino group also contains at least one further primary amino group, and, if appropriate, further
C) primary and/or secondary amines.

2. Water-dilutable binders for cationic electrocoating finishes which contains latent primary amino groups and is based on reaction products of epoxy resins and polyamines, which contain at least one blocked primary amino group, and, if appropriate, further primary and/or secondary amines, characterized in that the binder is prepared from

A) an epoxy resin and
B) a reaction product which is obtained by reacting an aldehyde with a polyamine, which in addition to a sterically hindered primary amino group also contains at least one further primary amino group, and, if appropriate, further
C) primary and/or secondary amines.

3. Binders according to Claim 1 or 2, characterized in that the amount of ketone or aldehyde used in the preparation of component B) is chosen so that all sterically unhindered primary amino groups of the polyamine are blocked.

4. Binders according to Claims 1 to 3, characterized in that the polyamine used is an unsubstituted or substituted alicyclic or aliphatic polyamine which in addition to a sterically hindered primary amino group also contains a further primary amino group.

5. Binders according to Claims 1 to 3, characterized in polyamine used is an unsubstituted or substituted alicyclic or aliphatic -alkyl-substituted polyamine.

6. Binders according to Claims 1 to 3 characterized in that sterically hindered polyamine used is a polyamine of the formula

$$H_2N-\overset{\overset{R^4}{|}}{\underset{\underset{R^5}{|}}{C}}-R^6-(-NH_2)_n \qquad (III)$$

where
$R^4$ is alkyl of 1 to 5 carbon atoms, preferably methyl, ethyl or propyl,
$R^5$ is H or $R^4$,
$R^6$ is unsubstituted or substituted alkylene of 1 to 20 carbon atoms, preferably $-(CH_2)_m-$ where $m = 1 - 10$, and
$n \geqslant 1$.

7. Binders according to Claims 1 to 3, characterized in that the polyamine used is 1,2-propanedine.

8. Binders according to Claims 1 to 3, characterized in the polyamine used is 1,2-diamino-2-methylpropane.

9. Binders according to Claims 1 to 8, characterized in that a mixture of various ketones and/or aldehydes is used in the preparation of component B.

10. Binders according to Claims 1 to 9, characterized in that a mixture of various polyamines is used in the preparation of component B.

11. Process for the preparation of a water-dilutable binder for cationic electrocoating finishes which contains latent primary amino groups and is based on reaction products of epoxy resins and polyamines, which contain at least one primary amino group blocked by ketiminization, and, if appropriate, further primary or secondary amines, characterized in that the binder is prepared by reacting

A) an epoxy resin with
B) a reaction product obtained by reacting a ketone with a polyamine, which in addition to a sterically hindered primary amino group also contains at least one further primary amino group, and, if appropriate, with further
C) primary and/or secondary amines.

12. Process for the preparation of a water-dilutable binder for cationic electrocoating finishes which contains latent primary amino groups and is based on reaction products of epoxy resins and polyamines, which contain

at least one blocked primary amino group, and, if appropriate, further primary or secondary amines, characterized in that the binder is prepared by reacting

A) an epoxy resin with
B) a reaction product obtained by reacting an aldehyde with a polyamine, which in addition to a sterically hindered primary amino group also contains at least one further primary amino group, and, if appropriate, with further
C) primary and/or secondary amines.

13. Process according to Claims 11 or 12, characterized in that the amount of ketone or aldehyde used in the preparation of component B is chosen so that all sterically unhindered primary amino groups of the polyamine are blocked.

14. Process according to Claims 11 to 13, characterized in that the polyamine used is an unsubstituted or substituted alicyclic or aliphatic polyamine which in addition to a sterically hindered primary amino group also contains at least one further primary amino group.

15. Process according to Claims 11 to 13, characterized in that the polyamine used is an unsubstituted or substituted alicyclic or aliphatic -alkyl-substituted polyamine.

16. Process according to Claims 11 to 13, characterized in that a polyamine of the formula

$$H_2N\text{-}\underset{R^5}{\overset{R^4}{C}}\text{-}R^6\text{-}(\text{-}NH_2)_n \qquad (III)$$

where
$R^4$ is alkyl of 1 to 5 carbon atoms, preferably methyl, ethyl or propyl,
$R^5$ is H or $R^4$,
$R^6$ is unsubstituted or substituted alkylene of 1 to 20 carbon atoms, preferably $-(CH2)_m-$ where $m = 1 - 10$, and
$n \geqslant 1$, is used as the sterically hindered polyamine.

17. Process according to Claims 11 to 13, characterized in that the polyamine used is 1,2-propanediamine.

18. Process according to Claims 11 to 13, characterized in that the polyamine used is 1,2-diamino-2-methylpropane.

19. Process according to Claims 11 to 18, characterized in that a mixture of various ketones and/or aldehydes is used in the preparation of component B.

20. Process according to Claims 11 to 19, characterized in that a mixture of various polyamines is used in the preparation of component B.

21. Use of a binder according to Claims 1 to 10 for electrocoating baths.

**Revendications**

1. Liants diluables dans l'eau, renfermant des groupes amino primaires latents, pour vernis d'électrodéposition cationiques, à base de produits de réaction de résines époxy et de polyamines, qui renferment au moins un groupe amino primaire bloqué par cétimination, de même que, le cas échéant, d'autres amines primaires et/ou secondaires, caractérisés par le fait que les liants ont été préparés à partir:

A) d'une résine époxy et
B) d'un produit de réaction, qui a été obtenu par réaction d'une cétone avec une polyamine, laquelle renferme, en plus d'un groupe amino primaire à empêchement stérique, encore au moins un autre groupe amino primaire, de même que, le cas échéant, d'autres
C) amines primaires et/ou secondaires.

2. Liants diluables dans l'eau, renfermant des groupes amino primaires latents, pour vernis d'électrodéposition cationiques, à base de produits de réaction de résines époxy et de polyamines, qui renferment au moins un groupe amino primaire bloqué, de même que, le cas échéant, d'autres amines primaires et/ou secondaires, caractérisés par le fait que les liants ont été préparés à partir:

A) d'une résine époxy, et
B) d'un produit de réaction, qui a été obtenu par réaction d'un aldéhyde avec une polyamine, laquelle renferme, en plus d'un groupe amino primaire à empêchement stérique, encore au moins un autre groupe amino primaire, de même que, le cas échéant, d'autres
C) amines primaires et/ou secondaires.

3. Liants selon l'une des revendications 1 et 2, caractérisés par le fait que la quantité de cétone ou d'aldéhyde mise en oeuvre lors de la préparation du composant B) a été choisie de telle sorte que tous les groupes amino primaires de la polyamine, qui n'ont pas d'empêchement stérique, ont été bloqués.

4. Liants selon l'une des revendications 1 à 3, caractérisés par le fait que, comme polyamine, une polyamine alicyclique ou aliphatique, éventuellement substituée, a été utilisée, laquelle renferme, en plus d'un groupe amino primaire à empêchement stérique, encore au moins un autre groupe amino primaire.

5. Liants selon l'une des revendications 1 à 3, caractérisés par le fait que, comme polyamine, une polyamine substituée par alkyle, alicyclique ou aliphatique, éventuellement substituée, a été utilisée.

8. Liants selon l'une des revendications 1 à 3, caractérisés par le fait que, comme polyamine à empêchement stérique, une polyamine de la formule générale III a été utilisée:

$$\begin{array}{c} R^4 \\ | \\ H_2N\text{-}C\text{-}R^6\text{-}(\text{-}NH_2)_n \\ | \\ R^5 \end{array} \qquad (III)$$

où:
- $R^4$ = alkyle en $C_{1-5}$, de préférence, méthyle, éthyle, propyle;
- $R^5$ = H ou $R^4$;
- $R^6$ = alkylène en $C_{1-20}$, éventuellement substitué, de préférence, $-(CH_2)_m-$, avec m = 1 - 10;
- $n \geqslant 1$.

7. Liants selon l'une des revendications 1 à 3, caractérisés par le fait que, comme polyamine, la propane-1,2 diamine a été utilisée.

8. Liants selon l'une des revendications 1 à 3, caractérisés par le fait que, comme polyamine, le diamino-1,2 méthyl-2 propane a été utilisé.

9. Liants selon l'une des revendications 1 à 8, caractérisés par le fait que, lors de la préparation du composant B, un mélange de différentes cétones et/ou aldéhydes a été utilisé.

10. Liants selon l'une des revendications 1 à 9, caractérisés par le fait que, lors de la préparation du composant B, un mélange de différentes polyamines a été utilisé.

11. Procédé de fabrication de liants diluables dans l'eau, renfermant des groupes amino primaires latents, pour vernis d'électrodéposition cationiques, à base de produits de réaction de résines époxy et de polyamines, qui renferment au moins un groupe amino primaire bloqué par cétimination, de même que,1e cas échéant, d'autres amines primaires ou secondaires, caractérisé par le fait que les liants sont préparés par réaction:

A) d'une résine époxy avec
B) un produit de réaction, qui a été obtenu par réaction d'une cétone avec une polyamine, laquelle renferme, en plus d'un groupe amino primaire à empêchement stérique, encore au moins un autre groupe amino primaire, de même que, le cas échéant, avec d'autres
C) amines primaires et/ou secondaires.

12. Procédé de fabrication de liants diluables dans l'eau, renfermant des groupes amino primaires latents, pour vernis d'électrodéposition cationiques, à base de produits de réaction de résines époxy et de polyamines, qui renferment au moins un groupe amino primaire bloqué, de même que, le cas échéant, d'autres amines primaires ou secondaires, caractérisé par le fait que les liants sont préparés par réaction

A) d'une résine époxy avec
B) un produit de réaction, qui a été obtenu par réaction d'un aldéhyde avec une polyamine, laquelle renferme, en plus d'un groupe amino primaire à empêchement stérique, encore au moins un autre groupe amino primaire, de même que, le cas échéant, avec d'autres
C) amines primaires et/ou secondaires.

13. Procédé selon l'une des revendications 11 ou 1, caractérisé par le fait que la quantité de cétone ou d'aldéhyde mise en oeuvre lors de la préparation du composant B a été choisie de telle sorte que tous les groupes amino primaires de la polyamine, qui n'ont pas d'empêchement stérique, ont été bloqués.

14. Procédé selon l'une des revendications 11 à 13, caractérisé par le fait que, comme polyamine, une polyamine alicyclique ou aliphatique, éventuellement substituée, a été utilisée, laquelle renferme, en plus d'un groupe amino primaire à empêchement stérique, encore au moins un autre groupe amino primaire.

15. Procédé selon l'une des revendications 11 à 13, caractérisé par le fait que, comme polyamine, une polyamine substituée par alkyle, alicyclique ou aliphatique, éventuellement substituée, a été utilisée.

16. Procédé selon l'une des revendications 11 à 13, caractérisé par le fait que, comme polyamine à empêchement stérique, une polyamine de la formule générale III a été utilisée:

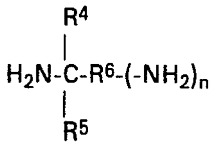

(III)

où:

- $R^4$ = alkyle en $C_{1-5}$, de préférence, méthyle, éthyle, propyle;
- $R^5$ = H ou $R^4$;
- $R^6$ = alkylène en $C_{1-20}$, éventuellement substitué, de préférence, $-(CH_2)_m-$, avec m = 1 - 10;
- n $\geqslant$ 1.

17. Procédé selon l'une des revendications 11 à 13, caractérisé par le fait que, comme polyamine, la propane-1,2 diamine a été utilisée,

18. Procédé selon l'une des revendications 11 à 13, caractérisé par le fait que, comme polyamine, le diamino-1,2 méthyl-2 propane a été utilisé.

19. Procédé selon l'une des revendications 11 à 18, caractérisé par le fait que, lors de la préparation du composant B, un mélange de différentes cétones et/ou aldéhydes a été utilisé.

20. Procédé selon l'une des revendications 11 à 19, caractérisé par le fait que, lors de la préparation du composant B, un mélange de différentes polyamines a été utilisé.

21. Utilisation des liants tels que définis à l'une des revendications 1 à 10 pour bains d'électrodéposition.